# EUROPEAN PATENT APPLICATION

(11) **EP 3 466 600 A1**
(43) Date of publication of application: **10.04.2019**
(21) Application number: 18195306.8
(22) Date of filing: 18.09.2018
(51) Int. Cl.: B23K 26/144, B23K 26/24, B23K 26/32, B23K 26/34, B23K 33/00, B23K 26/21, B23K 26/60, F01D 9/04, B23K 101/00

(54) **MEMBER JOINING METHOD AND TURBINE COMPONENTS**

(30) Priority: 19.09.2017 JP 2017179332
(71) Applicant: MITSUBISHI HEAVY INDUSTRIES, LTD., Tokyo 108-8215 (JP)
(72) Inventor: TANIGAWA, Shuji, Tokyo, 108-8215 (JP); MEGA, Masahiko, Tokyo, 108-8215 (JP); KITAMURA, Masashi, Tokyo, 108-8215 (JP)
(74) Representative: Henkel, Breuer & Partner

(57) **Abstract**

In a member joining method for joining an airfoil divided body (first member) (15) with a joint body (second member) (25, 35) by welding, the airfoil divided body (first member) (15) and the joint body (second member) (25, 35) include hooked portions (18a, 48a) formed on abutment surfaces thereof on which the airfoil divided body (first member) (15) and the joint body (second member) (25, 35) abut on each other. The welding of the airfoil divided body (first member) (15) and the joint body (second member) (25, 35) is performed from sides of gas path surfaces (high-temperature use environmental surfaces) (20a, 30a) in the airfoil divided body (first member) (15) and the joint body (second member) (25, 35) under a condition in which the airfoil divided body (first member) (15) abuts on the joint body (second member) (25, 35) through the hooked portions (18a, 48a).

## Description

### [Technical Field]

The present invention relates to a member joining method through which a plurality of members are joined by welding and to turbine components manufactured through the member joining method.

### [Background Art]

A turbine used in, for example, a gas turbine or a steam turbine is configured such that a plurality of vanes and a plurality of blades are alternately disposed in a casing along a direction in which combustion gas or steam flows. The vanes are each supported by a shroud mounted inside the casing. The blades are each supported by a rotor. In such a turbine, the combustion gas or the steam passes through the vanes and the blades, which drives to rotate the rotor (see, for example, Patent Literature 1).

### [Citation List]

### [Patent Literature]

### [Patent Literature 1]

Japanese Patent No. 3782637

### [Summary of Invention]

### [Technical Problem]

Turbine blades (vanes and blades) used in the turbine have three-dimensional complicated shapes. Thus, depending on the shape involved, a turbine blade may be divided into a plurality of members that are then manufactured by casting or forging and are joined with each other by welding. In this case, the members manufactured by casting or forging have low dimensional accuracy compared with members manufactured by machining. Thus, welding a joint by forming a groove thereat results in a groove shape varying. Thus, manual TIG welding having tolerances with respect to variation in form accuracy is employed. Because the TIG welding is a welding method involving a large heat input, however, welding deformation is large and a deterioration range (heat affected zone) of the base metal is wide. Thus, the method involves a risk of, for example, a crack occurring in the heat affected zone in, for example, a high strength member including the turbine blade. Additionally, the TIG welding uses a welding rod for a filler material, however, it is difficult to produce a welding rod made of a high strength material used in, for example, turbine blades working in a severe operating environment. Thus, in the TIG welding, a filler material having a low strength (e.g., Inconel) is used instead of the same material. This limits spots to which welding is applied.

The present invention has been made in view of the foregoing situation and it is an object of the present invention to provide a member joining method capable of joining members efficiently and turbine components.

### [Solution to Problem]

To achieve the object described above, a member joining method according to the present invention is for joining a first member with a second member by welding. The method includes performing welding of the first member and the second member from a side of high-temperature use environmental surfaces of the first member and the second member under a condition in which the first member abuts on the second member through hooked portions, each hooked portion being provided on an abutment surface, on which the first member and the second member under abutting, of each of the first member and the second member.

Thus, when the first member and the second member have varying thicknesses depending on different portions thereof, a melt-through bead defect can occur and formation of a favorable melt-through bead is difficult at all welds. Thus, the welding is performed from the side of the high-temperature use environmental surface in the first member and the second member, whereby the melt-through bead is prevented from being formed at the weld on the high-temperature use environmental surface, and therefore quality is prevented from being degraded. As a result, the members can be effectively joined with each other. Furthermore, the first member is joined with the second member under a condition in which the first member abuts on the second member through the hooked portions, so that even more rigid joining can be achieved.

In the member joining method according to the present invention, the high-temperature use environmental surface of each of the first member and the second member has a joint groove on the side of the high-temperature use environmental surface, and the welding is performed from the side of the high-temperature use environmental surfaces using the joint grooves.

Thus, the welding is performed using the joint grooves in the first member and the second member from the side of the high-temperature use environmental surface, whereby a joint portion between the first member and the second member effectively melts and a sufficient depth of fusion is secured, and therefore burn-through is avoided. Additionally, a sufficient welding padding amount can be obtained.

In the member joining method according to the present invention, the joint grooves have an angle set to fall within a range from 20 degrees to 40 degrees.

The setting of the angles of the joint grooves to fall within an optimum range prevents lack of penetration, so that quality can be prevented from being degraded. The setting also prevents the amount of weld metal to be used from increasing, so that material cost can be prevented from increasing.

In the member joining method according to the present invention, the welding is performed from the side of the high-temperature use environmental surfaces by a laser powder build-up welding method.

Thus, the use of the laser powder build-up welding method reduces a deterioration range (heat affected zone) of a base metal at a weld, so that a welding defect including a crack can be prevented. The laser powder build-up welding method also involves a small heat input and thus can prevent deformation by welding.

In the member joining method according to the present invention, the first member, the second member, and powder used in the laser powder build-up welding method are made of a same material.

Thus, the use of the same material for the first member, the second member, and the powder, or the setting of the material having higher strength allows the strength at the weld to be effectively enhanced.

The member joining method according to the present invention includes machining the first member and the second member so that thicknesses on joint surfaces of the first member and the second member become a predetermined thickness in a welding direction; performing the welding; and repairing machined portions and defective portions of melt-through beads by padding.

The performance of the welding after the joint surfaces between the first member and the second member have been machined to achieve the predetermined thickness and repairing by padding the machined portions and defective portions of the melt-through beads prevent a welding defect from occurring, so that high product quality can be steadily maintained. A defect in the melt-through bead portion, such as underfill, is on a side of a non-high-temperature use environmental surface, and thus the defect can be repaired by TIG welding for low strength materials.

In the member joining method according to the present invention, the first member has positioning portions. The method includes fixing the first member at a position where joint surfaces of the first member and the second member are in tight contact with each other, with a jig through the positioning portions; and performing the welding under the fixing condition.

Thus, the welding is performed under the condition in which the first member is fixed at a position where the joint surfaces are in tight contact with each other, by the jig with the positioning portions. As a result, the first member and the second member are readily positioned by the jig, so that workability can be improved and welding accuracy can be enhanced.

In the member joining method according to the present invention, the first member has a shape long in a vertical direction, the second member is disposed around the first member, the jig is a first jig that supports the positioning portions formed on ends of the first member in the vertical direction, and the second member has an outer surface supported by a second jig.

The foregoing configuration results in the first jig supporting respective ends of the first member and the second jig supporting the outer surface of the second member. The first member and the second member can thus be positioned at proper positions, so that welding accuracy can be enhanced.

In the member joining method according to the present invention, the first member has a periphery supported by a third jig.

Thus, the third jig for supporting the periphery of the first member can prevent the first member from collapsing, so that positioning accuracy of the first member and the second member can be enhanced.

In the member joining method according to the present invention, either one or both of the first member and the second member are formed by a three-dimensional deposition method.

Thus, the formation of either one or both of the first member and the second member individually through the three-dimensional deposition method enables a substantial reduction in the amount of support members used. Thus, time and labor required for a deposition step can be reduced and time and labor required for post-processing of the supporting can be reduced. As a result, the first member and the second member can be efficiently joined with each other.

In the member joining method according to the present invention, the first member is an airfoil divided body constituting an airfoil of a turbine vane, the second member includes a plurality of shroud divided bodies constituting a shroud of the turbine vane, and the high-temperature use environmental surface is a gas path surface.

Thus, the turbine vane can be efficiently manufactured.

A turbine component according to the present invention is manufactured by the member joining method described above.

Thus, the turbine component can be manufactured even more efficiently.

### [Advantageous Effects of Invention]

In accordance with the aspect of the member joining method and the turbine components, the members can be efficiently joined with each other.

### [Brief Description of Drawings]

FIG. 1 is an illustrative view of an exemplary turbine vane according to an embodiment.
FIG. 2 is an illustrative view of an exemplary joint portion between an airfoil and a shroud.
FIG. 3 is a flowchart depicting a method for manufacturing the turbine vane according to the present embodiment.
FIG. 4 is a front elevational view of a supporting condition of the airfoil, an inner shroud, and an outer shroud supported by jigs.
FIG. 5 is a cross-sectional view of a joint portion between the airfoil and the inner and outer shrouds.
FIG. 6 is a front elevational view of the airfoil and the inner and outer shrouds supported and joined by the jigs.
FIG. 7 is a front elevational view of a joint condition between the airfoil and the inner and outer shrouds.
FIG. 8 is a front elevational view of a supporting condition of the airfoil and the inner shroud supported by another jig.
FIG. 9 is a plan view of the supporting condition of the airfoil and the inner shroud supported by the other jig.
FIG. 10 is a cross-sectional view of another joint portion between the airfoil and the inner and outer shrouds.
FIG. 11 is a front elevational view of an airfoil and inner and outer shrouds representing a method for manufacturing the turbine vane according to a modification.
FIG. 12 is a front elevational view of the airfoil and the inner and outer shrouds representing the method for manufacturing the turbine vane according to the modification.
FIG. 13 is a front elevational view of the airfoil and the inner and outer shrouds representing the method for manufacturing the turbine vane according to the modification.
FIG. 14 is a front elevational view of the airfoil and the inner and outer shrouds representing the method for manufacturing the turbine vane according to the modification.

### [Description of Embodiments]

The following describes, with reference to the accompanying drawings, a member joining method and turbine components according to an embodiment of the present invention. The embodiment is not intended to limit the scope of the invention. The elements described with reference to the embodiment include those that can be easily replaced by those skilled in the art, those that are easy, and those that are substantially identical to each other.

The embodiment will be described for the member joining method as applied to a turbine vane joining method (turbine vane manufacturing method).

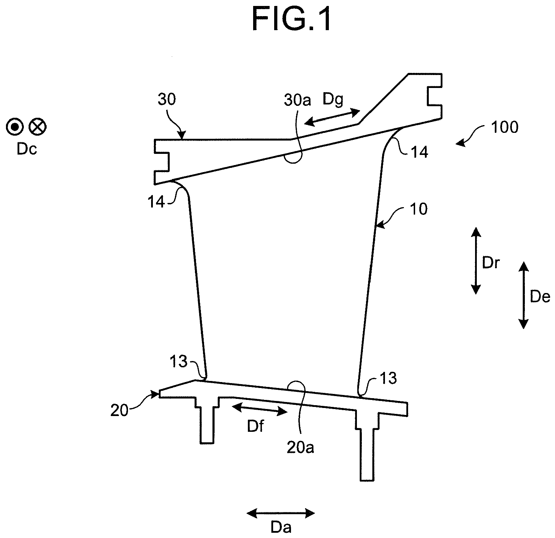

FIG. 1 is an illustrative view of an exemplary turbine vane 100 according to the embodiment. The turbine vane 100 illustrated in FIG. 1 is, for example, a turbine vane used in a gas turbine, a steam turbine, or the like, but is illustrative only and not limiting. As illustrated in FIG. 1, the turbine vane 100 includes an airfoil 10, and an inner shroud 20 and an outer shroud 30 as shrouds.

The airfoil 10 has, for example, a hollow shape. The airfoil 10 includes, under a condition in which the airfoil 10 is disposed in a turbine, a front end portion on the upstream side (left-hand side in FIG. 1) in a combustion gas flow direction (axial direction Da) and a rear end portion on the downstream side (right-hand side in FIG. 1) in the axial direction Da. The front end portion has a curved cross-sectional shape and the rear end portion has a tapered cross-sectional shape. The airfoil 10 further includes, under the condition in which the airfoil 10 is disposed in the turbine, a ventral portion on a first side (closer to the viewer of FIG. 1) in a direction orthogonal to the combustion gas flow direction (circumferential direction Dc) and a dorsal portion on a second side (farther from the viewer of the FIG. 1) in the circumferential direction Dc. The ventral portion has a convex curved cross-sectional shape and the dorsal portion has a concave curved cross-sectional shape.

The airfoil 10 has an inside partitioned into a plurality of cavities by a bulkhead. The airfoil 10 has a plurality of cooling holes, not illustrated, that provide communication between the inside and outside. The cooling holes are provided at predetermined positions associated with respective cavities. The airfoil 10 includes a perforated plate disposed inside each of the cavities. The airfoil 10 is subjected to impingement cooling by cooling air supplied to each of the cavities. The cooling air is then jetted out from each cooling hole to thereby subject the airfoil 10 to film cooling.

The airfoil 10 is formed under a condition where the material used for an airfoil is deposited in one direction, for example, in a radial direction Dr. Thus, the airfoil 10 extends in the radial direction Dr. Specifically, an extending direction De of the airfoil 10 coincides with the radial direction Dr. The airfoil 10 has an end on a first side (lower side in FIG. 1) in a depositing direction (radial direction Dr) fixed to the inner shroud 20 and an end on a second side (upper side in FIG. 1) fixed to the outer shroud 30. The airfoil 10 includes fillet portions 13 and 14 having curved shapes on both ends in the radial direction Dr. The fillet portions 13 are provided on the side of the inner shroud 20 in the radial direction Dr. The fillet portions 14 are provided on the side of the outer shroud 30 in the radial direction Dr.

The inner shroud 20 and the outer shroud 30 each function as a gas path surface (high-temperature use environmental surface) forming member. Specifically, the inner shroud 20 has a gas path surface (high-temperature use environmental surface) 20a on a side adjacent to the airfoil 10. The outer shroud 30 has a gas path surface 30a on a side adjacent to the airfoil 10. The gas path surfaces 20a and 30a each assume, when disposed in the turbine, a surface in contact with the combustion gas and each have a temperature rising up to about 900°C. Non-gas path surfaces (low-temperature use environmental surfaces) that are back surfaces of the respective gas path surfaces 20a and 30a each assume, when disposed in the turbine, a surface not in contact with the combustion gas and each have a temperature rising up to about 300°C to 400°C.

The inner shroud 20 extends in a direction extending along the gas path surface 20a. The direction extending along the gas path surface 20a will hereinafter be referred to as an extending direction Df of the inner shroud 20. Specifically, the extending direction Df of the inner shroud 20 is a direction angled with respect to the extending direction De of the airfoil 10 and is a direction including the axial direction Da and the circumferential direction Dc, and a direction having an axial direction Da component and a circumferential direction Dc component. The outer shroud 30 extends in a direction extending along the gas path surface 30a. The direction extending along the gas path surface 30a will hereinafter be referred to as an extending direction Dg of the outer shroud 30. Specifically, the extending direction Dg of the outer shroud 30 is a direction angled with respect to the extending direction De of the airfoil 10 and is a direction including the axial direction Da and the circumferential direction Dc, and a direction having an axial direction Da component and a circumferential direction Dc component. It is, however, noted that extending directions of the outer shroud and the inner shroud are not limited to directions specified by reference numerals Df and Dg and are required only to be directions extending along the gas path surfaces 20a and 30a. In addition, although the outer shroud 30 will be exemplarily described as the shroud in the following, the same description applies to the inner shroud 20.

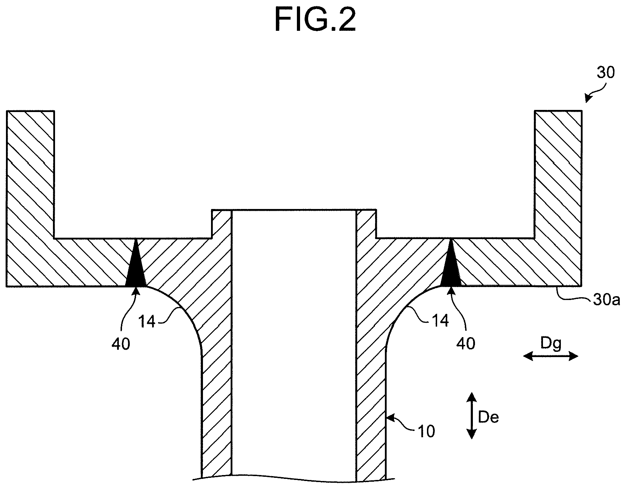

FIG. 2 is an illustrative view of an exemplary joint portion between the airfoil 10 and the outer shroud 30. As illustrated in FIG. 2, the airfoil 10 is joined with the outer shroud 30 by joint portions 40. The joint portions 40 are welds formed by, for example, the laser powder build-up welding method. The joint portions 40 are formed at positions shifted from the fillet portions 14. For example, the joint portions 40 are formed at positions outside the fillet portions 14 in the airfoil 10. At each of the joint portions 40, the airfoil 10 is joined with the outer shroud 30 under a condition in which a joint groove is formed in the gas path surface 30a. The joint portions 40 are flush with the gas path surface 30a. It is noted that the outer shroud 30 (inner shroud 20) is configured such that a plurality of shroud divided bodies are joined with each other at the joint portions that are the welds formed by, for example, the laser powder build-up welding method.

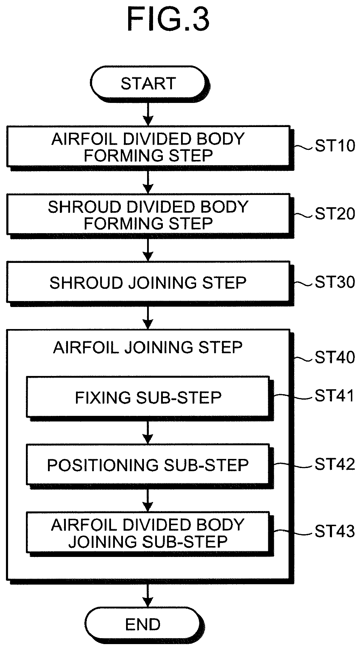

FIG. 3 is a flowchart depicting a method for manufacturing the turbine vane 100 according to the present embodiment. As illustrated in FIG. 3, the turbine vane manufacturing method includes an airfoil divided body forming step ST10, a shroud divided body forming step ST20, a shroud joining step ST30, and an airfoil joining step ST40.

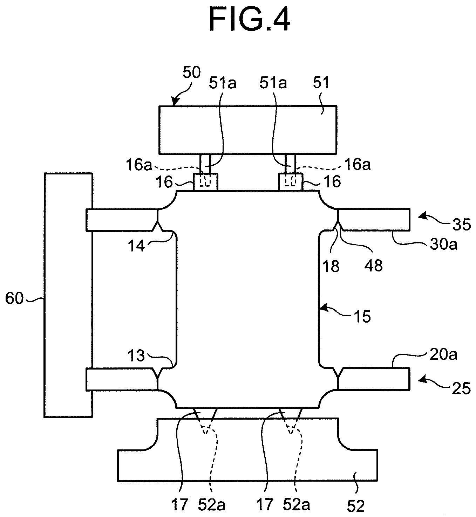

At the airfoil divided body forming step ST10, airfoil divided bodies constituting the airfoil 10 are formed by, for example, a three-dimensional deposition method. At the airfoil divided body forming step ST10, an airfoil divided body 15 as a divided body that constitutes a part of the airfoil 10 is also formed by, for example, the three-dimensional deposition method. Casting, forging, or machining such as cutting may be employed instead of the three-dimensional deposition method. At this time, the airfoil divided body 15 is formed so as to include positioning portions 16 and 17 (see FIG. 4). The positioning portions 16 and 17 function to achieve correct positioning with respect to a first jig 50 (see FIG. 4, for example) to be described later and are mounted on the first jig 50. The positioning portions 16 have recesses 16a. The positioning portions 17 are spindle-shaped protrusions. These shapes of the positioning portions 16 and 17 are illustrative only and not limiting and the positioning portions 16 and 17 may have different shapes.

In the present embodiment, the airfoil divided body 15 is joined with the inner shroud 20 at positions outside the fillet portions 13 in the extending direction Df of the inner shroud 20. The airfoil divided body 15 is joined with the outer shroud 30 at positions outside the fillet portions 14 in the extending direction Dg of the outer shroud 30. Thus, the airfoil divided body 15 is formed so as to include at least the fillet portions 13 and 14. Additionally, joint grooves 18 are formed at joint portions with the inner shroud 20 and the outer shroud 30. The joint grooves 18 are formed on sides corresponding to the gas path surfaces 20a and 30a of the inner shroud 20 and the outer shroud 30, respectively. The formation of the airfoil 10 and the shroud divided bodies completes the airfoil divided body forming step ST10.

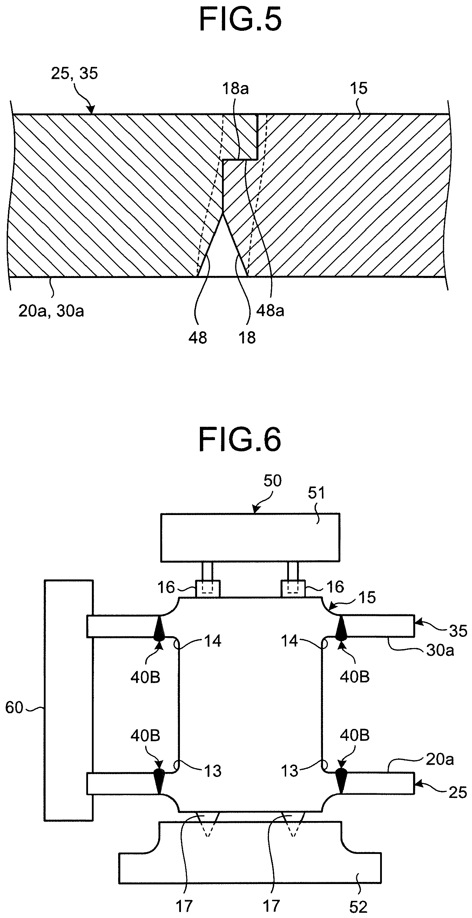

At the shroud divided body forming step ST20, a plurality of shroud divided bodies of at least either one of the inner shroud 20 and the outer shroud 30 are formed individually by, for example, the three-dimensional deposition method. At this time, the shape of the shroud divided body is designed so that a dimension of a joint portion used for joining the shroud divided body is small. The shroud divided body is designed so that, for example, the joint portion is formed at a position at which a distance between a front edge side curved surface portion, a rear edge side curved surface portion, or a back side curved surface portion of the airfoil 10 and an end face 30b or 30c of the outer shroud 30 in the extending direction Dg is small. Additionally, joint grooves 48 (see, for example, FIGS. 4 and 5) are formed in the joint portions of the shroud divided body to be joined with the airfoil 10. The joint grooves 48 are formed on the side of the gas path surfaces 20a and 30a of the inner shroud 20 and the outer shroud 30, respectively.

At the shroud joining step ST30, the shroud divided bodies are joined with each other. For the joining, the shroud divided bodies are correctly positioned with each other and the respective joint portions are mated with each other. Under the foregoing condition, the joint portions of the respective shroud divided bodies are welded with each other by, for example, the laser powder build-up welding method. The welding by the laser powder build-up welding method can achieve efficient and rigid welding of the shroud divided bodies. The joining of the respective shroud divided bodies forms joint bodies 25 of the inner shroud 20 and joint bodies 35 of the outer shroud 30.

At the airfoil joining step ST40, the airfoil divided body 15 is joined with the joint bodies 25 and 35. The airfoil joining step ST40 includes a fixing sub-step ST41, a positioning sub-step ST42, and an airfoil divided body joining sub-step ST43. At the fixing sub-step ST41, the positioning portions 16 and 17 of the airfoil divided body 15 are fixed to the first jig 50 and the joint bodies 25 and 35 are fixed to a second jig 60. At the positioning sub-step ST42, the airfoil divided body 15 fixed to the first jig 50 and the joint bodies 25 and 35 fixed to the second jig 60 are positioned correctly with each other. At the airfoil divided body joining sub-step ST43, the airfoil divided body 15 and the joint bodies 25 and 35 that have been positioned correctly with each other are joined with each other.

FIG. 4 is an illustrative view of a condition in which the fixing sub-step ST41 and the positioning sub-step ST42 have been performed. As illustrated in FIG. 4, at the fixing sub-step ST41, protrusions 51a of a support member 51 of the first jig 50 are inserted in the recesses 16a in the respective positioning portions 16 of the airfoil divided body 15. Additionally, the positioning portions 17 of the airfoil divided body 15 are inserted in insertion holes 52a in a support member 52 of the first jig 50. The joint bodies 25 and 35 are fixed to the second jig 60. Then, at the positioning sub-step ST42, the airfoil divided body 15 fixed to the first jig 50 is positioned correctly with respect to the joint bodies 25 and 35 fixed to the second jig 60.

FIG. 5 is an illustrative view of a condition in which the airfoil divided body 15 has been positioned correctly with respect to the joint bodies 25 and 35. As illustrated in FIG. 5, the joint grooves 18 are formed in a surface of the airfoil divided body 15. The surface of the airfoil divided body 15 is brought into abutment with the joint bodies 25 and 35. Additionally, the joint grooves 48 are formed in surfaces of the joint bodies 25 and 35. The surfaces of the joint bodies 25 and 35 are brought into abutment with the airfoil divided body 15. The joint grooves 18 and 48 are formed in the gas path surfaces 20a and 30a of the inner shroud 20 and the outer shroud 30, respectively. The foregoing configuration allows a melt-through bead to be prevented from being formed on sides of the gas path surfaces 20a and 30a at the joint portions, so that quality can be prevented from being degraded. Hooked portions 18a and 48a, for example, may be provided on abutment surfaces on which the airfoil divided body 15 and the joint bodies 25 and 35 abut on each other. In this case, the airfoil divided body 15 and the joint bodies 25 and 35 are brought into abutment and joined with each other through the hooked portions 18a and 48a, so that even more rigid joining can be achieved. It is noted that the hooked portions 18a and 48a are not necessarily required.

The airfoil divided body joining sub-step ST43 is performed after the airfoil divided body 15 has been positioned correctly with respect to the joint bodies 25 and 35. FIG. 6 is an illustrative view of an example of the airfoil divided body joining sub-step ST43. At the airfoil divided body joining sub-step ST43, the airfoil divided body 15 is welded to the joint bodies 25 and 35 through, for example, the laser powder build-up welding method. For the powder used in the welding, a powder of a material identical to, for example, the material used for the airfoil 10 and the inner and outer shrouds 20 and 30, specifically, the powder of the material identical to the material used for the airfoil and the shrouds can be used. The foregoing results in a configuration having favorable strength at welded portions. Additionally, the welding involves a small heat input and thus can prevent deformation by welding. At this step, the airfoil divided body 15 is welded to the joint bodies 25 and 35 at positions shifted from the fillet portions 13 and 14.

The welding of the airfoil divided body 15 to the joint bodies 25 and 35 through the laser powder build-up welding method is performed in a plurality of sequences. For a first sequence, the welding condition is such that a depth of fusion is obtained and for second and subsequent sequences, the welding condition is such that a welding padding amount is obtained. Specifically, in the first welding sequence, small portions in bottoms of the joint grooves 18 and 48 are welded together and in the second and subsequent welding sequences, build-up welding is performed by weaving until a predetermined padding height is achieved at the joint grooves 18 and 48. Through the foregoing welding sequences, welds 40B are formed between the airfoil divided body 15 and the joint bodies 25 and 35 as illustrated in FIG. 6, for example. After the welds 40B have been formed, the first jig 50 is removed from the airfoil divided body 15 and the second jig 60 is removed from the joint bodies 25 and 35.

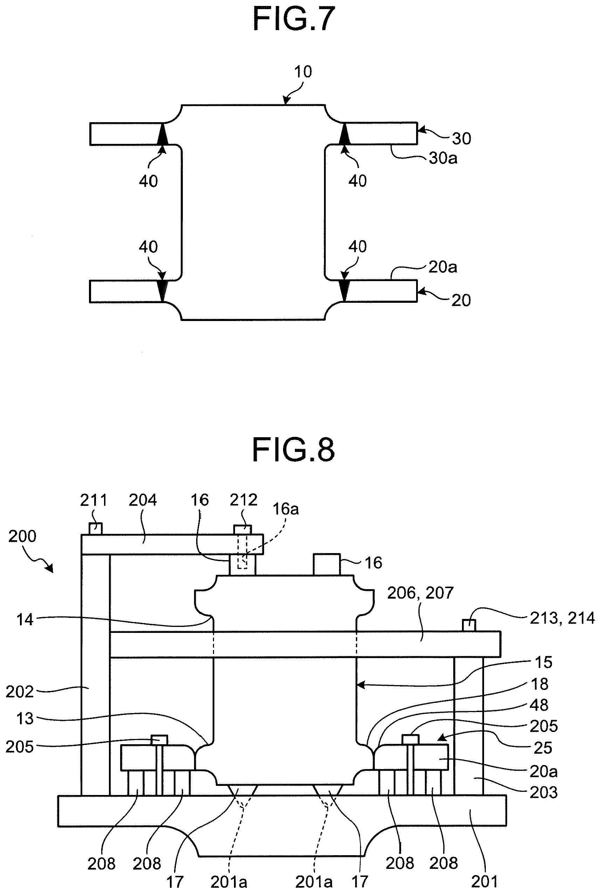

The performance of the laser powder build-up welding method may result in the welds 40B bulging from the gas path surfaces 20a and 30a. In this case, bulges on surfaces of the welds 40B are removed so that, for example, the surfaces of the welds 40B are flush with the gas path surfaces 20a and 30a as illustrated in FIG. 7. Thus, the turbine vane 100 including the airfoil 10 and the inner and outer shrouds 20 and 30 is obtained.

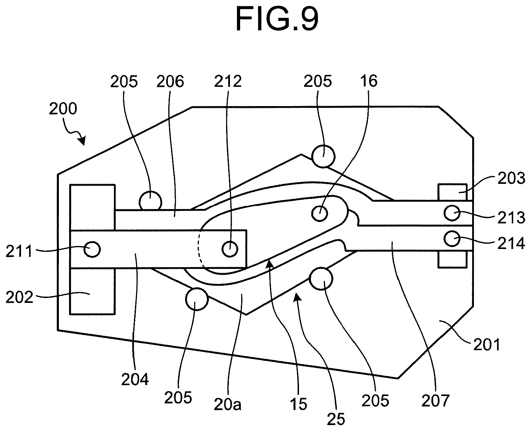

The technical scope of the present invention is not limited to the above embodiment. FIG. 8 is a front elevational view of a supporting condition of the airfoil and the inner shroud supported by another jig. FIG. 9 is a plan view of the supporting condition of the airfoil and the inner shroud supported by the other jig.

As illustrated in FIGS. 8 and 9, the airfoil divided body 15 is supported by a jig 200 at the fixing sub-step ST41 (see FIG. 3) described previously. The jig 200 includes a base 201, columns 202 and 203, a first jig 204, a second jig 205, and third jigs 206 and 207. Additionally, the second jig 205 includes a plurality of auxiliary jigs 208. The column 202 stands on a first end of the base 201 and the column 203 stands on a second end of the base 201. Work is first performed to join the airfoil divided body 15 with the joint bodies 25. The airfoil divided body 15 is placed on the base 201 and the positioning portions 17 are inserted in insertion holes 201a in the base 201. A first end of the first jig 204 is fixed to an upper end of the column 202 by a fixing pin 211. A second end of the first jig 204 is positioned on the positioning portion 16 of the airfoil divided body 15 and a fixing pin 212 is passed through the first jig 204 to be inserted in the recess 16a in the positioning portion 16.

The joint bodies 25 are placed around the airfoil divided body 15 on the base 201. At this time, the joint bodies 25 are placed on the respective auxiliary jigs 208 fixed to the base 201 and are then aligned with the airfoil divided body 15 in the vertical direction. The second jigs 205 are fixed to the base 201 under a condition in which the second jigs 205 contact outer surfaces of the joint bodies 25 on outer peripheries of the joint bodies 25. The third jigs 206 and 207 have first ends coupled with the column 202, intermediate portions clamping the airfoil divided body 15, and second ends coupled with an upper end of the column 203 by fixing pins 213 and 214. Then, at the positioning sub-step ST42 (see FIG. 3), the airfoil divided body 15 supported by the first jig 204 and the third jigs 206 and 207 is positioned correctly with respect to the joint bodies 25 supported by the second jigs 205.

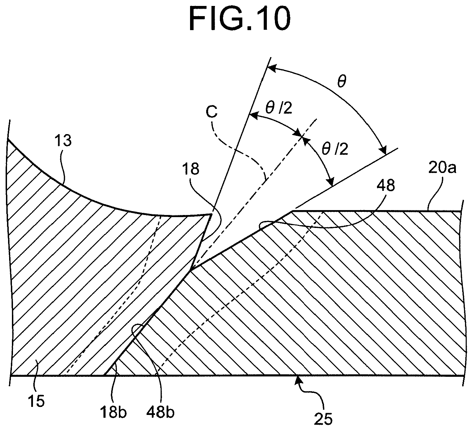

FIG. 10 is an illustrative view of a condition in which the airfoil divided body 15 is positioned correctly with respect to the joint body 25. As illustrated in FIG. 10, the joint groove 18 is formed in a surface of the airfoil divided body 15. The surface of the airfoil divided body 15 is brought into abutment with the joint body 25. Additionally, the joint groove 48 is formed in a surface of the joint body 25. The surface of the joint body 25 is brought into abutment with the airfoil divided body 15. The joint grooves 18 and 48 are formed in the respective gas path surfaces 20a of the inner shroud 20. The foregoing configuration allows a melt-through bead to be prevented from being formed on sides of the gas path surfaces 20a at the joint portions, so that quality can be prevented from being degraded. In this case, a welding direction C is inclined at a predetermined angle with respect to the gas path surface 20a and the joint grooves 18 and 48 each assume an inclined surface with respect to the gas path surface 20a. It is noted that joint surfaces 18b and 48b each extend along the welding direction C. The joint grooves 18 and 48 are each set to a predetermined angle θ that ranges from 20 degrees to 40 degrees with respect to the welding direction C. Specifically, the joint grooves 18 and 48 are each set to a θ/2 angle that ranges from 10 degrees to 20 degrees on either side with respect to a laser beam emitting direction (welding direction C). An optimum setting is θ/2 = 15 degrees.

The airfoil divided body joining sub-step ST43 (see FIG. 3) is performed after the airfoil divided body 15 has been positioned correctly with respect to the joint body 25. At the airfoil divided body joining sub-step ST43, the airfoil divided body 15 is welded to the joint body 25 through, for example, the laser powder build-up welding method. For the powder used in the welding, a powder of a material identical to, for example, the material used for the airfoil 10 and the inner and outer shrouds 20 and 30, specifically, the powder of the material identical to the material used for the airfoil and the shrouds can be used. The foregoing results in a configuration having favorable strength at the weld. Additionally, the welding involves a small heat input and thus can prevent deformation by welding. At this step, the airfoil divided body 15 is welded to the joint body 25 at positions shifted from the fillet portions 13 and 14.

The performance of the foregoing welding step forms the weld 40B (see FIG. 6) between the airfoil divided body 15 and the joint body 25. After the weld 40B has been formed, the airfoil divided body 15 and the joint body 25 are removed from the jig 200. Work is next performed to join the airfoil divided body 15 with the joint body 35 through the method identical to the above-described steps. Specifically, the airfoil divided body 15 joined with the joint body 35 is placed on the base 201 upside down with respect to what was described above and the positioning portions 17 are inserted in the insertion holes 201a in the base 201. The second end of the first jig 204 is positioned on the positioning portion 16 of the airfoil divided body 15 and the fixing pin 212 is passed through the first jig 204 to be inserted in the recess 16a in the positioning portion 16.

The joint body 35 is placed around the airfoil divided body 15 on the base 201. At this time, the joint body 35 is placed on the corresponding auxiliary jigs 208 fixed to the base 201 and is then aligned with the airfoil divided body 15 in the vertical direction. The second jig 205 is fixed to the base 201 under a condition in which the second jig 205 contacts the outer surface of the joint body 35 on the outer periphery of the joint body 35. The third jigs 206 and 207 have the first ends coupled with the column 202, the intermediate portions clamping the airfoil divided body 15, and the second ends coupled with the upper end of the column 203 by the fixing pins 213 and 214. Then, at the positioning sub-step ST42 (see FIG. 3), the airfoil divided body 15 supported by the first jig 204 and the third jigs 206 and 207 is positioned correctly with respect to the joint body 35 supported by the second jigs 205. At the airfoil divided body joining sub-step ST43 (see FIG. 3), the airfoil divided body 15 is welded to the joint body 25 through, for example, the laser powder build-up welding method. The welding of the airfoil divided body 15 to the joint bodies 25 and 35 through the laser powder build-up welding method is performed in a plurality of sequences. For the first sequence, the welding condition is such that the depth of fusion is obtained and for second and subsequent sequences, the welding condition is such that the welding padding amount is obtained. Specifically, in the first welding sequence, small portions in bottoms of the joint grooves 18 and 48 are welded together and in the second and subsequent welding sequences, build-up welding is performed by weaving until a predetermined padding height is achieved at the joint grooves 18 and 48.

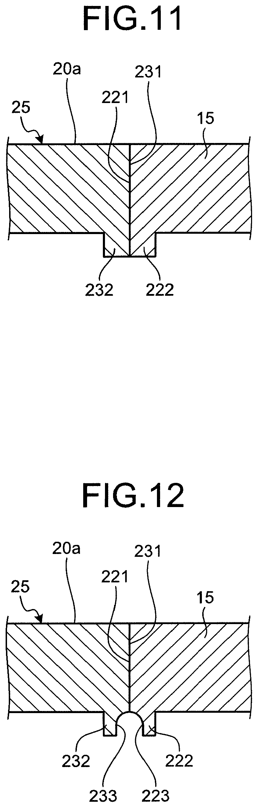

The technical scope of the present invention is not limited to the above embodiment. FIGS. 11 to 14 are each a front elevational view of an airfoil and inner and outer shrouds representing a method for manufacturing the turbine vane according to a modification.

The turbine vane manufacturing method differs in the airfoil and shroud joining process. In the joining method in the present embodiment, the airfoil is joined with the shroud through a laser melting method. As illustrated in FIG. 11, the airfoil divided body 15 and the joint body 25 are positioned and fixed so that joint surfaces 221 and 231 are in tight contact with each other by a jig not illustrated. As illustrated in FIG. 12, the airfoil divided body 15 and the joint body 25 have protrusions 222 and 232 formed on the joint surfaces 231 and 221, respectively, at lower surface portions. Thus, a thickness near each of the joint surfaces 221 and 231 differs from a thickness of other portions. Thus, the thicknesses in the joint surfaces 221 and 231 of the airfoil divided body 15 and the joint body 25 are machined in advance to achieve a predetermined thickness in a welding direction (direction orthogonal to the paper surface of FIG. 12). Specifically, by forming cutouts 223 and 233 in the protrusions 222 and 232, respectively, of the airfoil divided body 15 and the joint body 25, the thicknesses of the joint surfaces 221 and 231 are machined to the thickness of other portions. It is noted that the cutouts 223 and 233 may be formed before or after the positioning of the airfoil divided body 15 and the joint body 25. In the present embodiment, no joint grooves are formed.

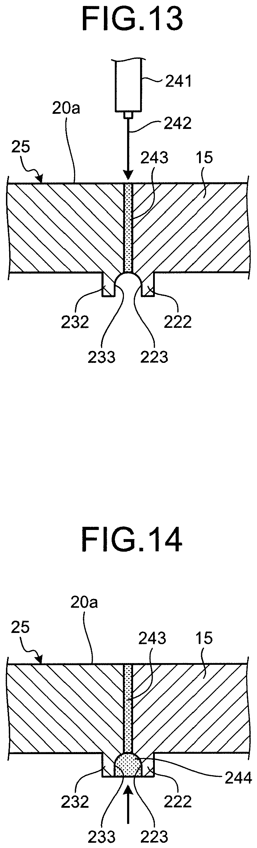

After the correct positioning having been made by the jig and after the cutouts 223 and 233 having been formed in the protrusions 222 and 232, the airfoil divided body 15 and the joint body 25 are subjected to welding by the laser melting method from the side of the gas path surface 20a as illustrated in FIG. 13. A laser head 241 is disposed on the side of the gas path surface 20a and emits a laser beam 242 toward the joint surfaces 221 and 231. Then, the joint surfaces 221 and 231 melt to form a weld 243, so that the airfoil divided body 15 is joined with the joint body 25. Thereafter, as illustrated in FIG. 14, build-up welding is performed in the cutouts 223 and 233 of the airfoil divided body 15 and the joint body 25, respectively, and the cutouts 223 and 233 are filled up with a build-up weld 244. After the weld 243 and the build-up weld 244 have been formed, the jig is removed from the airfoil divided body 15 and the joint body 25.

In accordance with the member joining method in the present embodiment, in the member joining method that joins the airfoil divided body (first member) 15 with the joint body (second member) 25 or 35 by welding, the welding is performed from the side of the gas path surface (high-temperature use environmental surface) 20a or 30a in the airfoil divided body 15 and the joint body 25 or 35.

Thus, when the airfoil divided body 15 and the joint body 25 or 35 have varying thicknesses depending on different portions thereof, a melt-through bead defect can occur and formation of a favorable melt-through bead is difficult at all welds. Thus, the welding is performed from the side of the gas path surface 20a or 30a in the airfoil divided body 15 and the joint body 25 or 35, whereby the melt-through bead is prevented from being formed at the weld on the gas path surface 20a or 30a, and therefore quality is prevented from being degraded. As a result, the airfoil divided body 15 can be effectively joined with the joint body 25 or 35.

The member joining method in the present embodiment thus provides the joint groove 18 or 48 formed on the side of the gas path surface 20a or 30a in the airfoil divided body 15 and the joint body 25 or 35 and performs welding using the joint groove 18 or 48 from the side of the gas path surface 20a or 30a. Thus, the welding is performed using the joint groove 18 or 48 in the airfoil divided body 15 and the joint body 25 or 35 from the side of the gas path surface 20a or 30a, whereby the joint portion between the airfoil divided body 15 and the joint body 25 or 35 effectively melts and a sufficient depth of fusion is secured, and therefore burn-through is avoided. Additionally, a sufficient welding padding amount can be obtained.

In the member joining method in the present embodiment, the angle of the joint groove 18 or 48 is set to a range from 20 degrees to 40 degrees. Specifically, the angle of the joint groove 18 or 48 is set so as to fall within an optimum range. This setting prevents lack of penetration, so that quality can be prevented from being degraded. The setting also prevents the amount of weld metal to be used from increasing, so that material cost can be prevented from increasing.

The member joining method in the present embodiment involves performance of welding from the side of the gas path surface 20a or 30a using the laser powder build-up welding method. Thus, the use of the laser powder build-up welding method reduces a deterioration range (heat affected zone) of a base metal at the weld, so that a welding defect including a crack can be prevented. The laser powder build-up welding method also involves a small heat input and thus can prevent deformation by welding.

In the member joining method in the present embodiment, the same material is used for the airfoil divided body 15, the joint body 25 or 35, and the powder used in the laser powder build-up welding method, or a material having higher strength is set. Thus, the use of the same material for the airfoil divided body 15, the joint body 25 or 35, and the powder, or the setting of the material having higher strength allows the strength at the weld to be effectively enhanced.

In the member joining method in the present embodiment, the joint surface between the airfoil divided body 15 and the joint body 25 or 35 is machined to achieve a predetermined thickness in the welding direction and then the welding is performed. The performance of welding after the joint surface between the airfoil divided body 15 and the joint body 25 or 35 has been machined to achieve the predetermined thickness prevents a welding defect from occurring, so that high product quality can be steadily maintained. A defect in the melt-through bead portion, such as underfill, is on the side of the gas path surface 20a or 30a, and thus the defect can be repaired by TIG welding for low strength materials.

In the member joining method in the present embodiment, the airfoil divided body 15 is provided with the positioning portions 16 and 17 and the airfoil divided body 15 is fixed at a position where the joint surfaces are in tight contact with each other, with the jigs 50 and 200 through the positioning portions 16 and 17, and the welding is performed under this condition. Thus, the welding is performed under the condition in which the airfoil divided body 15 is fixed at a position where the joint surfaces are in tight contact with each other, by the jigs 50 and 200 with the positioning portions. As a result the airfoil divided body 15 and the joint body 25 or 35 are readily positioned by the jigs 50 and 200, so that workability can be improved and welding accuracy can be enhanced.

In the member joining method in the present embodiment, the first member is the airfoil divided body 15 of the airfoil 10 having a shape long in a vertical direction, the second member is the joint body 25 or 35 of the inner shroud 20 or the outer shroud 30 disposed around the airfoil divided body 15, and the jig may be the first jig 50 or 204 that supports the positioning portions 16 and 17 formed on both ends in the vertical direction of the airfoil divided body 15, or the second jig 60 or 205 that supports the outer surface of the joint body 25 or 35. The foregoing configuration results in the first jig 50 or 204 supporting the corresponding end of the airfoil divided body 15 and the second jig 60 or 205 supporting the outer surface of the joint body 25 or 35. The airfoil divided body 15 and the joint body 25 or 35 can thus be positioned at proper positions, so that welding accuracy can be enhanced.

In the member joining method in the present embodiment, the jig 200 includes the third jigs 206 and 207 that support the periphery of the airfoil divided body 15. Thus, the third jigs 206 and 207 for supporting the periphery of the airfoil divided body 15 are provided. Accordingly, the third jigs 206 and 207 can prevent the airfoil divided body 15 from collapsing, so that positioning accuracy of the airfoil divided body 15 and the joint body 25 or 35 can be enhanced.

The turbine vane manufacturing method incorporating the member joining method in the present embodiment includes: the airfoil divided body forming step ST10 at which the airfoil divided bodies 15 constituting the airfoil 10 of the turbine vane 100 are formed by the three-dimensional deposition method; the shroud divided body forming step ST20 at which a plurality of shroud divided bodies of at least either one of the inner shroud 20 and the outer shroud 30 of the turbine vane 100 are formed individually by the three-dimensional deposition method; the shroud joining step ST30 at which the shroud divided bodies are joined with each other; and the airfoil joining step ST40 at which the airfoil divided body 15 is joined with the shroud divided bodies.

Thus, the formation of different components individually through the three-dimensional deposition method enables a substantial reduction in the amount of support members used, compared with formation of the airfoil and the shroud as a whole using the three-dimensional deposition method. Thus, time and labor required for the deposition step can be reduced and time and labor required for post-processing of the supporting can be reduced. Thus, the turbine vane 100 can be manufactured even more efficiently.

In the member joining method in the present embodiment, the airfoil divided body 15 includes the fillet portions 13 and 14 of the airfoil 10 and the airfoil joining step ST40 may include joining of the airfoil divided body 15 with the shroud divided body at positions shifted from the fillet portions 13 and 14. In this case, the turbine vane 100 can be manufactured efficiently, while quality is maintained.

The above embodiment has been described for an exemplary case in which the shroud divided bodies are formed for both the inner shroud 20 and the outer shroud 30. The exemplary case is, however, illustrative only and not limiting. For example, the inner shroud 20 and the outer shroud 30 may be formed integrally.

The above embodiment has been described, in the shroud joining step and the airfoil joining step of the turbine vane manufacturing method, for an exemplary case in which the divided bodies are welded together through the laser powder build-up welding method. The welding method is, however, illustrative only and not limiting. For example, the turbine vane manufacturing method may include a welding mode in which other types of welding method (e.g., TIG welding) are used instead of the laser powder build-up welding method. Additionally, the turbine vane may include a weld that is welded by other types of welding method (e.g., TIG welding) instead of the laser powder build-up welding method.

In each of the above embodiments, the airfoil divided bodies 15 constituting the airfoil 10 of the turbine vane 100 and the inner shroud 20 and the outer shroud 30 of the turbine vane 100 are manufactured through the three-dimensional deposition method. The method is, however, illustrative only and not limiting. After the airfoil and the shroud have been manufactured by casting or forging, a joint surface or an excess metal portion of the casting or forging may be finished by machining to form a groove portion. Alternatively, the airfoil and the shroud may be manufactured by cutting blocks by machining.

In each of the above embodiments, the first member is the airfoil 10 (airfoil divided body 15) of the turbine vane 100 and the second member is the inner shroud 20 and the outer shroud 30 of the turbine vane 100 (joint bodies 25 and 35). The specific components are, however, illustrative only and not limiting. The first member and the second member may be applied to other components. For example, the first member and the second member may be any other members that have the high-temperature use environmental surface and the low-temperature use environmental surface, such as for joining an inner cylinder with a transition piece in a gas turbine combustor.

## Claims

1. A member joining method for joining a first member with a second member by welding, the method comprising:
performing welding of the first member and the second member from a side of high-temperature use environmental surfaces of the first member and the second member under a condition in which the first member abuts on the second member through hooked portions, each hooked portion being provided on an abutment surface, on which the first member and the second member under abutting, of each of the first member and the second member.

2. The member joining method according to claim 1, wherein
the high-temperature use environmental surface of each of the first member and the second member has a joint groove on the side of the high-temperature use environmental surface, and
the welding is performed from the side of the high-temperature use environmental surfaces using the joint grooves.

3. The member joining method according to claim 2, wherein the joint grooves have an angle set to fall within a range from 20 degrees to 40 degrees.

4. The member joining method according to any one of claims 1 to 3, wherein the welding is performed from the side of the high-temperature use environmental surfaces by a laser powder build-up welding method.

5. The member joining method according to claim 4,
wherein the first member, the second member, and powder used in the laser powder build-up welding method are made of a same material.

6. The member joining method according to any one of claims 1 to 5, comprising:
machining the first member and the second member so that thicknesses on joint surfaces of the first member and the second member become a predetermined thickness in a welding direction;
performing the welding; and
repairing machined portions and defective portions of melt-through beads by padding.

7. The member joining method according to any one of claims 1 to 6, wherein
the first member has positioning portions, and
the method comprises
fixing the first member at a position where joint surfaces of the first member and the second member are in tight contact with each other, with a jig through the positioning portions; and
performing the welding under the fixing condition.

8. The member joining method according to claim 7, wherein
the first member has a shape long in a vertical direction,
the second member is disposed around the first member,
the jig is a first jig that supports the positioning portions formed on ends of the first member in the vertical direction, and
the second member has an outer surface supported by a second jig.

9. The member joining method according to claim 8, wherein the first member has a periphery supported by a third jig.

10. The member joining method according to any one of claims 1 to 9, wherein either one or both of the first member and the second member are formed by a three-dimensional deposition method.

11. The member joining method according to any one of claims 1 to 10, wherein
the first member is an airfoil divided body constituting an airfoil of a turbine vane,
the second member includes a plurality of shroud divided bodies constituting a shroud of the turbine vane, and
the high-temperature use environmental surface is a gas path surface.

12. A turbine component manufactured by the member joining method according to any one of claims 1 to 11.
